# EUROPEAN PATENT APPLICATION

(11) **EP 1 870 275 A2**
(43) Date of publication of application: **26.12.2007**
(21) Application number: 07011554.8
(22) Date of filing: 13.06.2007
(51) Int. Cl.: B60L 3/00, B60L 7/00

(54) **Electric rolling stock driving apparatus**

(30) Priority: 19.06.2006 JP 2006168853
(71) Applicant: Kabushiki Kaisha Toshiba, Minato-ku, Tokyo 105-8001 (JP)
(72) Inventor: Yuuki, Kazuaki, c/o Toshiba Corporation, Tokyo 105-8001 (JP); Nakazawa, Yosuke, c/o Toshiba Corporation, Tokyo 105-8001 (JP); Hashimoto, Masato, c/o Toshiba Corporation, Tokyo 105-8001 (JP); Noda, Shinichi, c/o Toshiba Corporation, Tokyo 105-8001 (JP); Tonoki, Kenzo, c/o Toshiba Corporation, Tokyo 105-8001 (JP); Koyama, Taihei, c/o Toshiba Corporation, Tokyo 105-8001 (JP); Nishio, Atsuhiko, c/o Toshiba Corporation, Tokyo 105-8001 (JP); Miyairi, Masaki, c/o Toshiba Corporation, Tokyo 105-8001 (JP)
(74) Representative: Hoffmann, Klaus

(57) **Abstract**

To provide an electric rolling stock driving apparatus allowing for an enhanced reliability of rolling stock system, a main motor 14 for driving an electric rolling stock, a VVVF inverter 13 for driving the main motor, and a brake controller 12 for controlling braking forces of wheels 16 are provided within a driving truck 9, allowing for an improvement in reliability of a rolling stock system that otherwise might have deficiencies such as an increased rolling stock manufacture term or an increased trouble restoration time by a complicated implementation of wiring due to an arrangement according to a relevant art in which, for driving a rolling stock, associated apparatuses are separately mounted to a car body and a truck.

## Description

### BACKGROUND OF THE INVENTION

### 1. Field of Art

The present invention relates to an electric rolling stock driving apparatus.

### 2. Description of Relevant Art

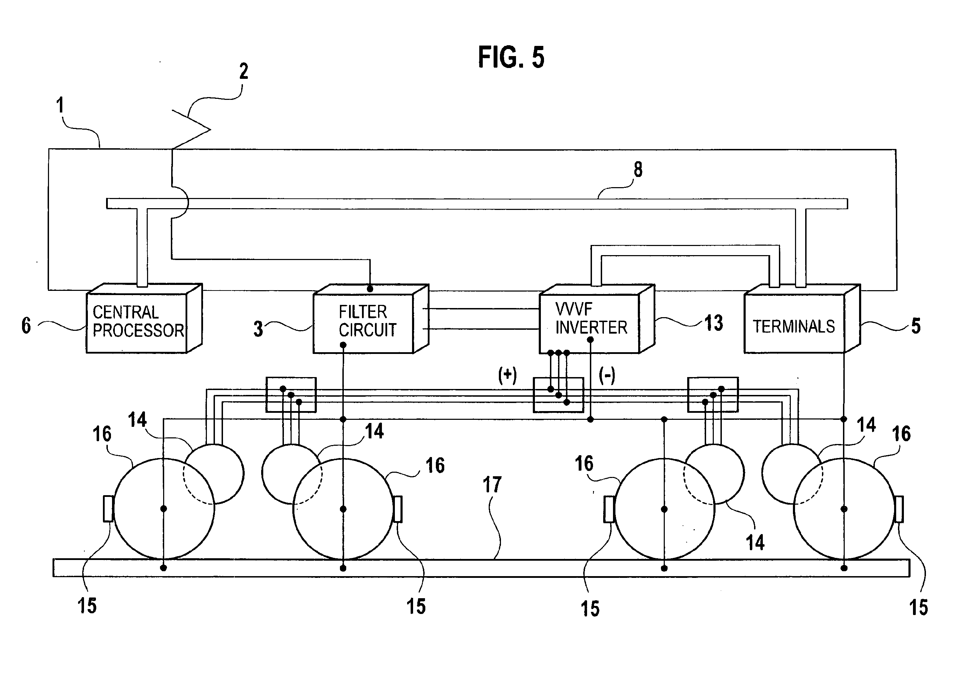

For rolling stocks such as electric cars and locomotives, the electric rolling stock driving apparatus needs a speedy delivery as well as safety. Generally, as illustrated in Japanese Patent Application Laid-Open Publication No. (Hei) 03-261307 and as also illustrated in Japanese Patent Application Laid-Open Publication No. (Hei) 08-336261, the electric rolling stock driving apparatus is configured principally with a brake controller, a main motor, and a VVVF (variable voltage variable frequency) inverter. And, as shown in Fig. 5, the configuration according to a relevant art includes a car body 1 having an intra-vehicle LAN (local area network) 8 installed therein, the intra-vehicle LAN 8 interconnecting a set of terminals 5 and a central processor 6, and on a roof of the car body 1 a pantograph 2 is installed. Among elements of electric rolling stock driving apparatus, a brake controller (not shown), an LC (inductance-capacitance) filter circuit 3, and a VVVF inverter 13 are supported under a floor of the car body 1, and a truck has installed therein a main motor 14 for driving wheels 16, a set of brake shoes 15 for application of braking forces thereto, and the like. As a result, the wiring as well as the piping is complicated such that power lines from the main motor 14 as well as signal lines of velocity detectors are extended from within the truck to the car body 1 side, needing man-hours for manufacture of rolling stocks, as a problem. Further, as apparatuses of the driving system have their installation places dispersed within the truck and at the car body 1 side as described, when a trouble or failure has occurred, it is unclear which apparatus to be replaced, thus needing a time for the restoration, as another problem.

### SUMMARY OF INVENTION

The present invention has been devised in view of such problems in the relevant art. It therefore is an object of the invention to provide an electric rolling stock driving apparatus allowing for an enhanced reliability of rolling stock system.

According to an aspect of the present invention, an electric rolling stock driving apparatus comprises a car body configured to accommodate passengers and goods; and a driving truck provided under a floor of the car body, which supports thereon a main motor configured to drive an electric rolling stock, a VVVF inverter configured to drive the main motor, and a brake controller configured to control braking forces applied to wheels.

According to the aspect of the invention, a main motor configured to drive an electric rolling stock, a VVVF inverter for the main motor, and a brake controller are provided within a system of driving truck, allowing for an improvement in reliability of a rolling stock system that otherwise might have deficiencies such as an increased rolling stock manufacture term or an increased trouble restoration time by a complicated implementation of wiring due to an arrangement according to a relevant art in which, for driving a rolling stock, associated apparatuses are separately mounted to a car body and a truck.

### BRIEF DESCRIPTION OF DRAWINGS

Fig. 1 is a block diagram of a driving apparatus of an electric rolling stock according to a first embodiment of the present invention.
Fig. 2 is a block diagram of a driving apparatus of an electric rolling stock according to a second embodiment of the present invention.
Fig. 3 is a block diagram of a driving apparatus of an electric rolling stock according to a third embodiment of the present invention.
Fig. 4 is a block diagram of a driving apparatus of an electric rolling stock according to a fourth embodiment of the present invention.
Fig. 5 is a block diagram of a driving apparatus of an electric rolling stock according to a relevant art.

### DETAILED DESCRIPTION OF THE PREFERRED EMBODIMENTS

There will be described below the preferred embodiments of the present invention into details with reference to the accompanying drawings. Like members or elements will be designated by like reference characters.

### (First Embodiment)

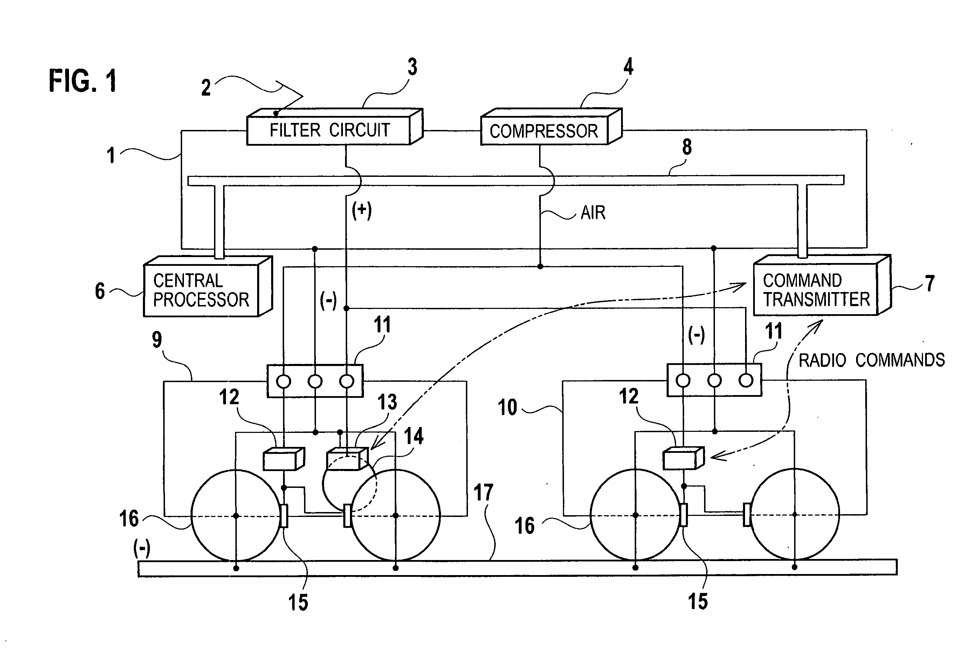

Description is now made of an electric rolling stock driving apparatus according to the first embodiment of the invention, with reference to Fig. 1. In a dc (direct current) electric rolling stock, a car body 1 is mounted on a driving truck 9 and a trailing truck 10. The car body 1 has a pantograph 2, an LC filter circuit 3, and a compressor 4 for services of compressed air, supported on a roof thereof. Further, in the car body 1, a central processor 6 and a command transmitter 7 with a function of radio communications are installed, which are interconnected by an intra-vehicle LAN 8.

The driving truck 9 is provided with a main motor 14 for driving a set of wheels 16 to rotate as drive wheels, a VVVF inverter 13 for driving the main motor 14 in a controlling manner, and a brake controller 12 adapted for control of braking forces of brake shoes 15 acting on the wheels 16. On the other hand, the trailing truck 10 is simply provided with a brake controller 12. The command transmitter 7 is adapted for transmission and reception by radio communications of control commands to, as well as part of responses from, the VVVF inverter 13 and the brake controller 12 in the driving truck 9 and the brake controller 12 in the trailing truck 10.

There is a connector 11 provided for connections between driving truck 9 and car body 1, where power supply positive lines and ground lines as well as compressed air lines for brake control are installed. As is for driving truck 9, for the side of trailing truck 10 also an identical connector 11 is provided,
where power supply positive lines are installed, as well.

To the VVVF inverter 13 is fed a positive (+) side of dc power supply from the car body 1 side. For wheels 16 and rails 17 as a ground concurrently serving as a negative (-) side, connections are made to the negative (-) side inside the driving truck 9.

At the car body 1 side, dc power supply (+) is received through the pantograph 2, and distributed from the LC filter circuit 3 to the connectors 11. Further, compressed air AIR for brakes are also distributed from the compressor 4 to the driving truck 9 and the trailing truck 10 via the connectors 11.

According to the present embodiment, in an electric rolling stock driving apparatus, a driving truck 9 has accommodated therein all of a main motor 14, a VVVF inverter 13 and, a brake controller 12, as a combination configured for generation as well as control of accelerating forces and decelerating forces to act on a rolling stock. Accordingly, in the event of a trouble, each truck can be handled as a unit of replacement to thereby achieve a complete restoration. Thus, for identification of the cause, the time can be saved, allowing for a rapid restoration with an enhanced contribution to a rolling stock system to be reliable. Further, the installation of wiring is facilitated in a simplified manner at the car body 1 side, and for each of trucks 9 and 10, as a unit, the wiring installation may be implemented in advance, so that for processes after assembly of an entire rolling stock, the man-hours can be reduced. It also is facilitated to render services for renewal of an old rolling stock, as well as for replacement with a new truck with an enhanced performance or of equipment, such as a VVVF inverter.

Moreover, according to the present embodiment, for truck 9 or 10 and car body 1, the wiring and piping to be extended in between can be reduced in number, and concurrently, they can be concentrated on a connector 11, allowing for a rapid truck replacement. In this respect, as well, the MTTR (mean time for trouble restoration) can be shortened, with an enhanced contribution to a rolling stock system to be reliable.

Further, according to the present embodiment, for VVVF inverter 13, the dc negative (-) side can be connected to a ground line of truck 9 or 10, enabling a reduction of redundant wiring, and a facilitated implementation of wiring installation, allowing for a shortened fabrication term of rolling stock, and a contribution to the maintenance to be simplified.

Furthermore, according to the present embodiment, at the car body 1 side, common connectors 11 are provided, as necessary, for connection to be possible whether to a driving truck 9 or a trailing truck 10. Accordingly, for a rolling stock in service, the performance can be modified in a facilitated manner in accordance with the condition of use. A comparison is now supposed between a rolling stock in a normal train and a rolling stock in an express train, for example. Relative to the latter, the former tends to run by low speeds with which cooling effects are not expectable, and repeats accelerations and decelerations with great heat generation. In other words, between a rolling stock for a normal service and a rolling stock for an express service, the required performances are different from each other. Therefore, in some cases in a relevant art, a rolling stock designed for either service is unable to be used for the other service. However, according to the present embodiment, such a use can be implemented simply by substituting a driving truck 9 for a trailing truck 10 in a car body 1. It therefore is allowed for railway companies to control the traffic of trains in a facilitated manner, with a possible reduction of redundant investment for facilities to reserve extra rolling stocks in dependence on required services.

Still more, according to the present embodiment, the driving truck 9 has a single main motor 14 and a VVVF inverter 13 mounted thereto, with ample margins secured in a space within the truck. For a current model of rolling stock, the ratio between numbers of axles provided with and without drive motor resides about 1:1, and the present embodiment is reasonable in that a single truck (to be provided with two axles) is given a single main motor. For railway companies, controlling identical trucks is more advantageous in cost and safety than controlling different trucks.

Yet more, according to the present embodiment, the provision of LC filter circuit 3 and compressor 4 as common equipment on a roof of the car body 1 enables effective utilization of a space under a floor of the car body 1. For example, the space under the floor may preferably be extended wide, for application to a double decker. The double decker may provide railway companies with such benefits as congestion mitigation in commute hours by an increased passenger capacity, and earnings recovery by an increased transport capacity.

In addition, according to the present embodiment, communications of control commands to the driving truck 9 and trailing truck 10, as well as part of responses therefrom, are made in a wireless manner by a command transmitter 7. This enables removal of light electrical wires that need a careful handling and troublesome implementation of wiring installation, either, thus allowing for a facilitated and simplified wiring installation, a reduced maintenance service, and a facilitated truck replacement, as well as contributions such as to the MTTR to be reduced for enhancement of reliability, and a flexible replacement to be implemented between driving trucks and trailing trucks.

### (Second Embodiment)

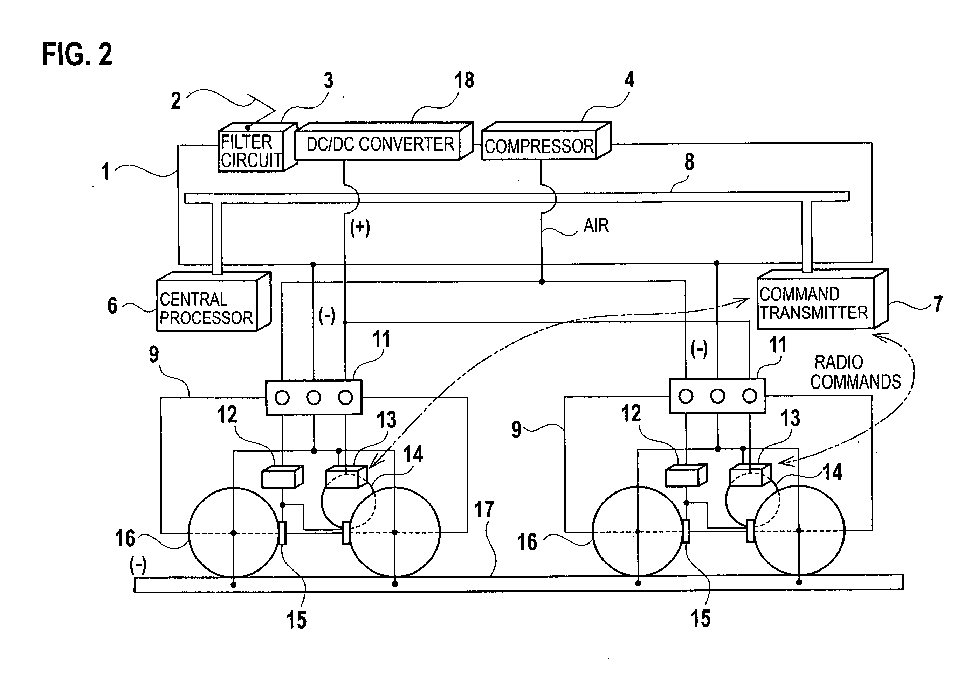

Description is now made of an electric rolling stock driving apparatus according to the second embodiment of the present invention, with reference to Fig. 2. Relative to the first embodiment shown in Fig. 1, the present embodiment features a driving truck 9 provided in place of the trailing truck 10, thus having a pair of driving trucks 9 provided for a car body 1, a DC/DC (dc-to-dc) converter 18 additionally provided on a roof of the car body 1. In Fig. 2, like elements to the first embodiment of Fig. 1 are designated by like reference characters.

The paired driving trucks 9 have a power supply as a common circuit, which is composed of an LC filter circuit 3 and a DC/DC converter 18. The DC/DC converter 18 serves to boost or drop a dc output voltage of the LC filter circuit 3.

According to the present embodiment, a plurality of driving trucks 9 have their VVVF inverters 13 installed therein, which do not have their dc power supply input circuits as equipments separately installed in the trucks, but have the common dc power supply as a concentrated equipment for a common use over the trucks, which allows for the provision of compact light-weight equipment at the car body 1 side, with a corresponding reduction of production cost.

### (Third Embodiment)

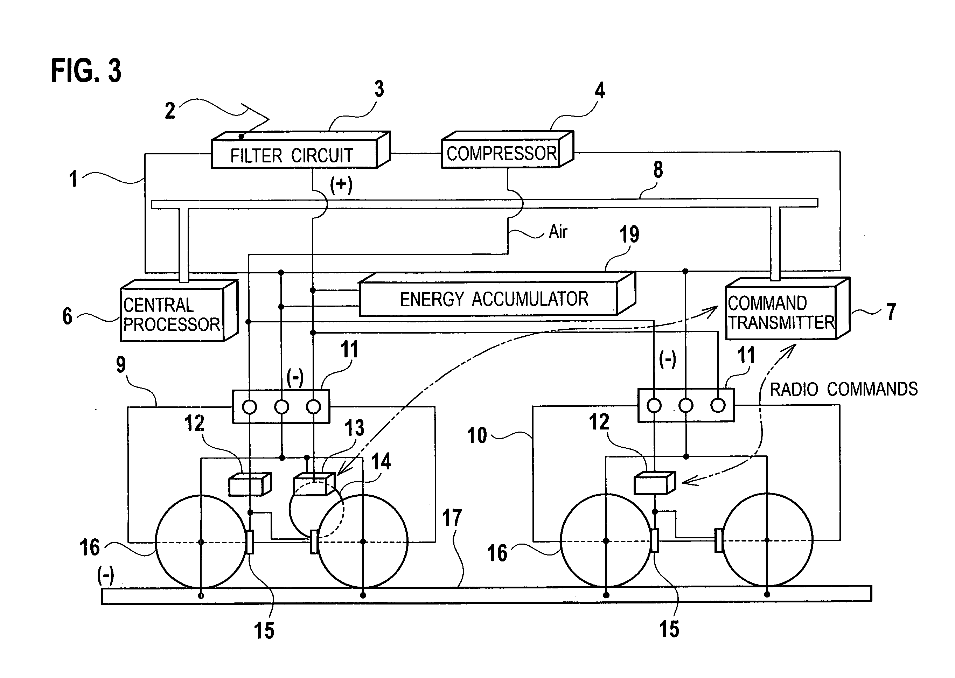

Description is now made of an electric rolling stock driving apparatus according to the third embodiment of the present invention, with reference to Fig. 3. Relative to the first embodiment shown in Fig. 1, the present embodiment features an energy accumulator 19 (as an energy storage device) provided under a floor of a car body 1. The energy accumulator 19 is adapted for charge and discharge of a large capacity of energy, and may comprise, for example, an EDLC (electric double-layer capacitor), a secondary cell, a fuel cell, or a diesel engine. Other elements of the third embodiment shown in Fig. 3 are common to the first embodiment shown in Fig. 1.

According to the present embodiment, a combination of a brake controller 12 and a VVVF inverter 13, to be disposed under a floor of a car body 1 in a relevant art, are installed together with a main motor 14 inside the driving truck 9, thus having a large space secured under a floor of the car body 1. There have been proposed various rolling stocks having an energy accumulator 19, for merits such as energy saving and autonomous travel of rolling stock, with no provision of a space practically available for their installation in a relevant art. However, according to the present embodiment, a free under-floor space is available for installation of a large capacity of energy accumulator 19, producing such effects as energy saving and autonomous travel of rolling stock, besides the effects of the first embodiment.

### (Fourth Embodiment)

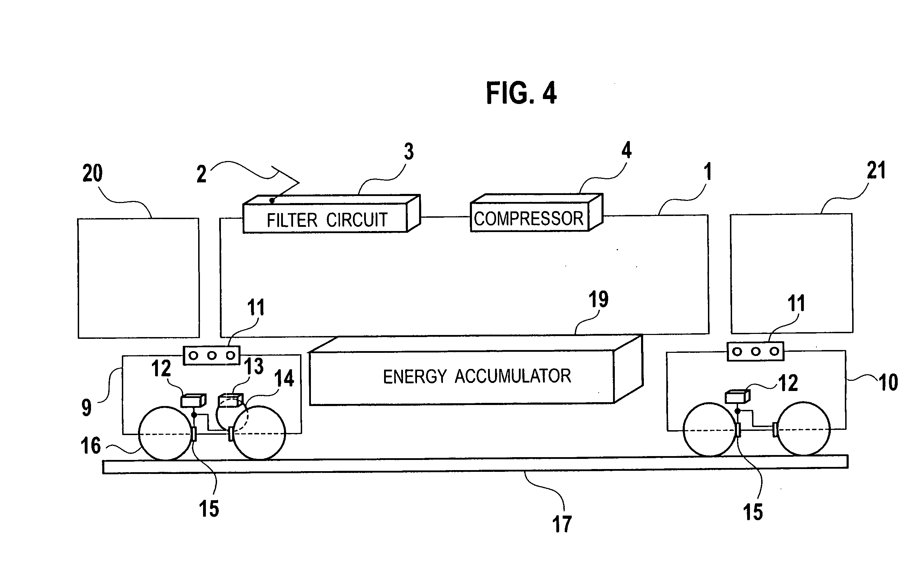

Description is now made of an electric rolling stock driving apparatus according to the fourth embodiment of the present invention, with reference to Fig. 4. Relative to the third embodiment shown in Fig. 3, the present embodiment has a different positional relationship between a car body 1 and a driving truck 9. This embodiment employs trucks each respectively called "coupling truck", and has the driving truck 9 to be interposed between the car body 1 and another car body 20, and a trailing truck 10 to be interposed between the car body 1 and still another car body 21. Electrical wiring as well as piping of compressed air from a compressor 4 is configured like the third embodiment. The present embodiment features an energy accumulator 19 (as an energy storage device) provided in a vacant space under a floor of the car body 1, like the third embodiment.

According to the present embodiment, such components as a brake controller 12 and a VVVF inverter 13, to be installed under a floor of a car body 1 in a relevant art, are installed inside the driving truck 9, allowing for an enlarged space secured under a floor of the car body 1, in combination with employment of a coupling truck system yet allowing for liberation of a greater vacant space secured under the floor of the car body 1. Then, the wide vacant space under the floor of the car body 1 is utilized for provision of an energy accumulator 19, allowing for the installation with a greater capacity than the third embodiment.

According to the present embodiment, a wide vacant space can be set under the floor of the car body 1, which allows an increased passenger capacity by employment of a double decker. The under-floor space may not be used for installation of a new device, but may be utilized for provision of a barrier-free low floor, allowing for configuration of a human-friendly railway system in consideration of a graying society. Further, the low-floor system may be applied to a subway, allowing for a reduced cross section of rolling stock, with an expectable effect of great reduction in civil engineering.

While preferred embodiments of the present invention have been described using specific terms, such description is for illustrative purposes, and it is to be understood that changes and variations may be made without departing from the scope of the following claims.

## Claims

1. An electric rolling stock driving apparatus comprising:
a car body configured to accommodate passengers and/or goods; and
a driving truck provided under a floor of the car body, to which a main motor configured to drive an electric rolling stock, a VVVF inverter configured to drive the main motor, and a brake controller configured for control of braking forces acting on wheels are mounted.

2. The electric rolling stock driving apparatus as claimed in claim 1, wherein a trailing truck having neither main motor nor VVVF inverter mounted thereto is provided under the car, and the total power output as a train set is adjustable by a number of drive and trailing trucks.

3. The electric rolling stock driving apparatus as claimed in claim 2, wherein the driving truck is attachable to an attachment portion for the trailing truck.

4. The electric rolling stock driving apparatus as claimed in claim 1, wherein a connector is provided at a connecting portion between the driving truck and the car body, the connector having a dc power supply line, a ground line and a braking piping integrated thereto.

5. The electric rolling stock driving apparatus as claimed in claim 1, wherein a single driving truck is provided with a single main motor.

6. The electric rolling stock driving apparatus as claimed in claim 1, wherein a common power supply configured for dc power supply for VVVF inverters is mounted on the car body side, the common power supply being common to the VVVF inverters mounted to a plurality of driving trucks, respectively.

7. The electric rolling stock driving apparatus as claimed in claim 6, wherein the common power supply is disposed on a roof of the car body.

8. The electric rolling stock driving apparatus as claimed in claim 1, wherein the main motor, the VVVF inverter and the brake controller are mounted within the driving truck as a unit.

9. The electric rolling stock driving apparatus as claimed in claim 1, wherein a command transmitter configured for radio transmission of a command to the brake controller or the VVVF inverter mounted to the driving truck is installed on the car body side.

10. The electric rolling stock driving apparatus as claimed in claim 1, wherein a negative side at a dc side of the VVVF inverter is connected to a grounded potential point in the driving truck.

11. The electric rolling stock driving apparatus as claimed in claim 1, wherein an energy accumulator is installed under a floor of the car body.

12. The electric rolling stock driving apparatus as claimed in claim 1, wherein the car body is a double decker.

13. The electric rolling stock driving apparatus as claimed in claim 1, wherein the car body has a low floor design.

14. The electric rolling stock driving apparatus as claimed in any one of claims 11 to 13, wherein the driving truck is a coupling truck disposed right below a coupling portion of a plurality of the car bodies in a train set.
